# EUROPÄISCHE PATENTANMELDUNG

(11) **EP 4 778 390 A2**
(43) Veröffentlichungstag der Anmeldung: **22.07.2026**
(21) Anmeldenummer: 25214283.1
(22) Anmeldetag: 07.11.2025
(51) Int. Cl.: A01N 33/08, A01N 25/04, A01P 3/00, B01F 27/94

(54) **KONSERVIERUNGSZUSAMMENSETZUNG**

(30) Priorität: 16.01.2025 DE 102025101480; 13.08.2025 AT 5502825 U
(71) Anmelder: Pigmentsolution GmbH, 4840 Vöcklabruck (AT)
(72) Erfinder: Höglinger, Gerald, 4840 Vöcklabruck (AT); Hartmann, Christoph, 82229 Seefeld (DE)
(74) Vertreter: Diehl & Partner

(57) **Zusammenfassung**

Eine Konservierungszusammensetzung beinhaltet Wasser, einen primären Aminoalkohol mit insgesamt 2 bis 6 Kohlenstoffatomen, wenigstens ein Tensid, und eine Pufferkomponente mit einem pKs-Wert zwischen 8 und 10,5. Eine Vorrichtung zur Herstellung der Zusammensetzung weist einen inneren Rotor-Zylinder und einen äußeren Stator-Zylinder auf, die dazu ausgebildet sind, das Mischgut in axialer Richtung durch einen Spalt zwischen beiden Zylindern zu führen, um unter Einwirkung einer Scherkraft eine Emulsion zu erzeugen. Diese Emulsion bzw. die so hergestellte Zusammensetzung wird als konservierender Zusatz zu einer wässrigen Dispersion mit einem Ziel-pH-Wert von 8 bis 10,5 verwendet.

## Beschreibung

Die vorliegende Erfindung betrifft eine Konservierungszusammensetzung, ihre Herstellung und eine Vorrichtung zu ihrer Herstellung, sowie ihre Verwendung.

Beim Lagern von wässrigen Dispersionen wie Wandfarben, Lacken etc. tritt leicht ein Problem mit Verkeimung wie z. B. Schimmelbildung auf. Es ist bekannt, zu deren Vermeidung ein Isothiazolinon-Derivat zuzusetzen, beispielsweise Methylisothiazolinon (MIT), Chlormethylisothiazolinon (CMIT) und/oder Benzisothiazolinon (BIT). So ist z. B. aus der Druckschrift EP 4 364 567 A1 eine antiseptische und antibakterielle Konservierungszusammensetzung auf der Grundlage von Alkylaminopropandiol bekannt, die für Reinigungsprodukte vorgesehen ist, die mit der Haut in Berührung kommen. Zur Behandlung bestimmter viraler Infektionen ist aus der Druckschrift EP 2 803 354 A1 eine Kombination aus Polyacrylsäure und 2-Amino-2-methylpropanol zur prophylaktischen und/oder therapeutischen Anwendung bekannt. Die Druckschrift WO 2009/140061 A2 offenbart eine antimikrobielle Zusammensetzung mit einem Biozid der obigen Art und einem primären Aminoalkohol. Die Druckschrift WO 2011/069961 A1 offenbart mit ähnlicher Zielsetzung eine Calciumcarbonat-Aufschlämmung mit einem Biozid und einem primären Monoalkanolamin. Neuere Untersuchungen haben aber gezeigt, dass die genannten Biozide gesundheitlich bedenklich oder gar schädlich sein können.

Es besteht daher ein Bedarf an einer Alternative zur Schimmelvermeidung und allgemeinen Konservierung der erwähnten wässrigen Dispersionen.

Hierzu schlägt die vorliegende Erfindung eine Konservierungszusammensetzung gemäß Anspruch 1, ein Herstellungsverfahren gemäß Anspruch 13, eine Vorrichtung gemäß Anspruch 14 und eine Verwendung gemäß Anspruch 16 oder 18 vor.

Die vorliegenden Erfinder haben gefunden, dass die erfindungsgemäße biostatische Zusammensetzung auch ohne biozidalen Zusatz eine Hemmung des Wachstums von Schimmelpilzen, Hefen, Bakterien und anderen Mikroben in wässrigen Dispersionen der oben genannten Art bewirkt. Somit ist die geforderte gesundheitlich unbedenkliche und somit genehmigungsfreie Zusammensetzung gefunden.

Unter einem weiteren Aspekt beinhaltet das Herstellungsverfahren für die Zusammensetzung einen Schritt des Homogenisierens auf eine Teilchengröße im Bereich von 50 - 500 nm ("nanodispers"), wodurch eine ausgezeichnete Wirksamkeit und Lager-Stabilität gegen Aufrahmen (über mehrere Monate) gewährleistet wird.

Unter einem dritten Aspekt beinhaltet eine Vorrichtung zur Herstellung der biostatischen Zusammensetzung bzw. zur Ausführung des obigen Verfahrens einen Kontinuierlicher-Durchfluss-Reaktor nebst einem leistungsfähigen Homogenisierer zur Ausübung der für eine nanodisperse Emulgation erforderlichen Scherkräfte.

Schließlich beinhaltet die vorliegende Erfindung unter einem vierten Aspekt eine Verwendung der eingangs genannten biostatischen Zusammensetzung als konservierender Zusatz zu einer wässrigen Dispersion. Insbesondere wirkt die Zusammensetzung als Mikrobenhemmer, insbesondere als Hemmer des Wachstums bzw. der Vermehrung von Schimmel, Hefen und Bakterien. Weiter insbesondere ist die wässrige Dispersion dabei ein Lack oder eine (Wand-)Farbe.

Ohne sich auf eine bestimmte Theorie festlegen zu wollen, nehmen die Erfinder an, dass die besonders feinteilige Emulsion es ermöglicht, dass der Aminoalkohol in den Stoffwechsel der Mikroben hemmend eingreift, ohne selber biozid zu wirken. Das hat den vorteilhaften Nebeneffekt, als solcher nicht allergen zu wirken. Zudem wird der pH-Wert der zu konservierenden Dispersion stabilisiert und Aufrahmen verhindert. Übrigens sind die in Rede stehenden wässrigen Dispersionen ganz überwiegend mehr oder weniger alkalisch, weisen also einen pH-Wert zwischen 8 und 10,5 auf.

Die erfindungsgemäße Zusammensetzung ist nicht als Biozid wirksam, reduziert also Keimzahlen nicht aktiv durch Abtöten von Keimen, sondern unterbindet lediglich deren Vermehrung in technischen Produkten. Wenn deren Keimbelastung vor der Anwendung der erfindungsgemäßen Zusammensetzung auf einem aus hygienischer Sicht zulässigen Level (Titer) ist, wird durch deren Zusatz sichergestellt, dass keine merkliche Vermehrung der schädlichen Keime stattfindet und das technische Produkt auch ohne Einsatz von Bioziden ohne bedenkliche Keimbelastung lagerfähig bleibt.

Ausführungsformen der Erfindung werden nachfolgend anhand von Figuren näher erläutert. Hierbei zeigt:
- Figur 1: ein Flussdiagramm für das Herstellungsverfahrens gemäß einem Aspekt der vorliegenden Erfindung;
- Figur 2: schematisch ein Blockdiagramm des Herstellungsverfahrens;
- Figur 3a, b: schematisch eine Vorrichtung zur Ausführung des Herstellungsverfahrens gemäß einem weiteren Aspekt der vorliegenden Erfindung.

Die erfindungsgemäße Zusammensetzung beinhaltet neben dem Hauptbestandteil Wasser (40 Gew.-% oder mehr, bevorzugt mehr als 50 Gew.-%) und dem primären Aminoalkohol (15 - 50 Gew.-%, bevorzugt weniger als 40 Gew.-%) sowie der Pufferkomponente ein Tensid in einer Konzentration, die seine Löslichkeit bei 23°C in dem Wasser-Aminoalkohol-Gemisch übersteigt, so dass keine klare Lösung vorliegt, sondern eine nanodisperse Emulsion. Gleichwohl ist diese Emulsion gegen Aufrahmen über mehrere Monate stabil, und zwar auch unter Lagerbedingungen mit Temperaturschwankungen im üblichen Bereich.

Die nanodisperse Emulsion wird dadurch erhalten, dass eine Mischung des Wassers, des Tensids und des Aminoalkohols (wahlweise auch der Pufferkomponente) durch einen Kontinuierlicher-Durchfluss-Reaktor bei Atmosphärendruck und leicht erhöhter Temperatur von z. B. 25 - 35°C einem Hochleistungs-Homogenisierer zugeführt wird, der bei 3000 - 9000 UpM bei einer radialen Spaltweite von typisch 100 µm, also 2πr/mm·500s⁻¹ bis 2πr/mm·1500s⁻¹ binnen max. 1 Minute mittlerer Durchflusszeit eine leicht getrübte, aber langzeitstabile Emulsion erzeugt. Je nach der Viskosität der Mischung können 1000 - 10000 UpM verwendet werden. Hierbei wurde, wie bei einem Rotations-Viskosimeter, die Scherung durch die Spaltweite dividiert, um die Schergeschwindigkeit zu erhalten, die, multipliziert mit der Viskosität, die erforderliche Schubspannung ergibt. Typische Radien für den inneren Rotor sind, je nach gewünschtem Durchsatz, 0,5 bis 6,0 cm, woraus eine Schergeschwindigkeit von 10000 s⁻¹ bis 100000 s⁻¹ resultiert. Selbstverständlich können beliebig viele solcher Reaktoren parallel angeordnet sein, sodass ein insgesamt hinreichender Durchfluss-Querschnitt bereitgestellt wird.

Zur Anwendung wird die erhaltene Nanoemulsion in einer Menge von wenigstens 0,1 Masse%, typischerweise aber 0,25 - 1,0 Masse% der zu konservierenden wasser-basierten Dispersion zugefügt. Dabei bewirkt die Pufferkomponente, dass der pH-Wert der wasser-basierten Dispersion nicht weiter sinkt, als um bis zu 0,1 Einheiten.

Ohne konservierenden Zusatz vermehren sich ubiquitär vorab vorhandene Hefen, Schimmelpilze und/oder Bakterien und erniedrigen allmählich durch ihre Stoffwechselprodukte den pH-Wert des Mediums, was ihr Wachstum bzw. ihre Vermehrung weiter begünstigt. Durch die erfindungsgemäße Zusammensetzung wird diese weitere Vermehrung bzw. Wachstum gehemmt, somit auch der pH-Wert stabilisiert.

Es sollte beachtet werden, dass eine mikrobiell vorbelaste Probe nach Zusatz der erfindungsgemäßen Konservierungszusammensetzung weiterhin mikrobiell belastet bleibt, diese Belastung aber nicht mehr zunimmt. Insofern ist bestätigt, dass der primäre Aminoalkohol selbst kein Biozid darstellt, sondern nur ein *Biostatikum.* Insbesondere enthält die erfindungsgemäße Zusammensetzung selbst kein Biozid.

Die erfindungsgemäße Zusammensetzung enthält, neben Wasser, primärem Aminoalkohol und einer Pufferkomponente sowie bedarfsweise weiteren Hilfsstoffen wenigstens ein Tensid, und zwar in einem Anteil, in dem es nicht mehr vollständig mit den Hauptkomponenten mischbar ist (bei 23°C). In Ausführungsformen weist die Zusammensetzung daher eine gewisse Trübung auf, die nephelometrisch (d. h. im Streulicht) oder auch turbidimetrisch (d. h. im Durchlicht) nach ISO 7027-1:2016 messbar ist. Es ist bevorzugt, wenn die Trübung bei 23°C höchstens 400 NTU (*nephelometric turbidity units*) beträgt. Die Trübung beruht auf dem Vorhandensein von Tensid-Mizellen. Beim Einmischen der Zusammensetzung in die zu konservierende Dispersion werden die in den Mizellen zusammengelagerten Tensid-Moleküle oberflächenaktiv und begünstigen die Einwirkung des Aminoalkohols auf dort befindliche Mikroben. Von diesem Gesichtspunkt aus ist es bevorzugt, wenn die Trübung nicht weniger als 50 NTU beträgt, da ansonsten der Tensidgehalt nicht ausreichen möchte. Übrigens entspricht diese Trübung, je nach eingesetztem Tensid, einem Massenanteil daran im Bereich von 1% bis 10%, bevorzugt 2,5% bis 5%.

Die erfindungsgemäße Zusammensetzung enthält kein oder im Wesentlichen kein Biozid, nämlich insbesondere weniger als 15 ppm MIT, weniger als 50 ppm CMIT und weniger als 500 ppm BIT.

Die Pufferkomponente der erfindungsgemäßen Zusammensetzung beinhaltet z. B. 0,1 - 2% eines sogenannten Good-Puffers, nämlich insbesondere einen, der ausgewählt ist aus der Gruppe, die aus 4-(2-Hydroxyethyl)-piperazin-1-propansulfonsäure, Glycinamid, N-(***Tri***(hydroxymethyl)methyl)gly***cin***, N,N-Bis(2-hydroxyethyl)glycin und [Tris(hydroxymethyl)methylamino]propansulfonsäure besteht, da diese einen im Vergleich zu anderen Good-Puffern hohen pKs-Wert aufweisen.

Als Tensid haben sich besonders nichtionische oberflächenaktive Substanzen wie z. B. Polyalkylenglycolether, Sorbitanfettsäureester, Alkylpolyglucoside oder Fettalkoholethoxylate erwiesen. Ebenso haben sich auch zwitterionische Tenside als geeignet erwiesen wie z. B. Betaine wie z. B. das Cocoamidopropylbetain oder Sultaine wie z. B. das Cocoamidopropylhydroxysultain.

Die erfindungsgemäßen Zusammensetzungen können in bevorzugten Ausführungsformen weitere Zusatz- und Hilfsstoffe enthalten, darunter sogenannte Superhydrophobe, z. B. n-Hexadecan oder ein anderes Alkan mit 9-24 C-Atomen, in einer geringen Menge von z. B. 0,05 - 0,1 Ma.-%, um die Ostwald-Reifung zu verhindern, und H-Brücken-Bildner wie Harnstoffderivate und Aminosäurederivate. Ohne sich auf eine bestimmte Theorie festlegen zu wollen, nehmen die Erfinder an, dass diese Stoffe supramolekulare Puffersysteme bilden, die etwaige Stoffwechselprodukte von Mikroben abfangen und damit deren Vermehrung behindern.

Durch die, bedingt durch die Reaktor-Geometrie und Betriebsweise, hohe Scherrate findet im Homogenisierer schnell eine weitgehende Desaggregation statt, und es wird eine nahezu monodisperse Emulsion mit Tröpfchengrößen zwischen 50 und 500 nm gebildet. Diese (Nano-, oder Mini-)Emulsion ist zudem außerordentlich lagerstabil. Anders als z. B. bei dem aus DT 2024714 bekannten koaxialen Reaktor ist der Spalt zwischen den beiden Zylindern nicht in Sektionen unterteilt, und die Zufuhr der zu vermischenden Komponenten erfolgt von der Stirnseite her direkt in den Spalt. Anders auch als z. B. bei dem aus DE 40 18 780 A1 bekannten koaxialen Hohlgefäß-Rührer ist dessen Außenumfang zylindrisch und nicht polygonal-prismatisch. Zudem sind die einander zugewandten Zylinderflächen im Wesentlichen glatt, so dass die Summe ihrer Rz-Werte (Peak-to-Valley-Rauigkeiten) kleiner ist als die nominelle Spaltweite, ganz im Gegensatz zu dem aus GB 2 118 058 A bekannten Koaxial-Mischer mit makroskopischen Vertiefungen in den Zylinderflächen und einer bei gleichem Rotordurchmesser um mehr als eine Größenordnung geringeren Drehzahl sowie einem um mehr als eine Größenordnung größeren Massendurchsatz.

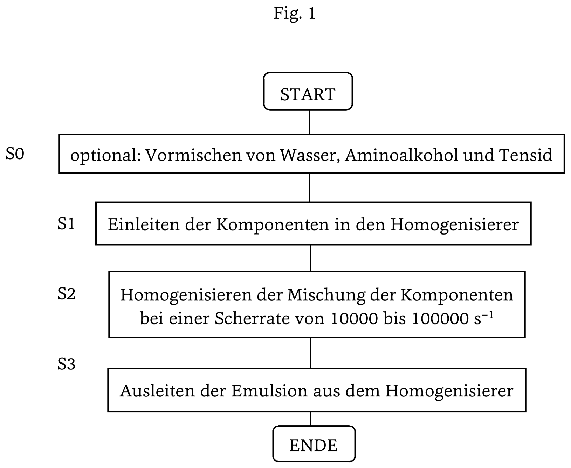

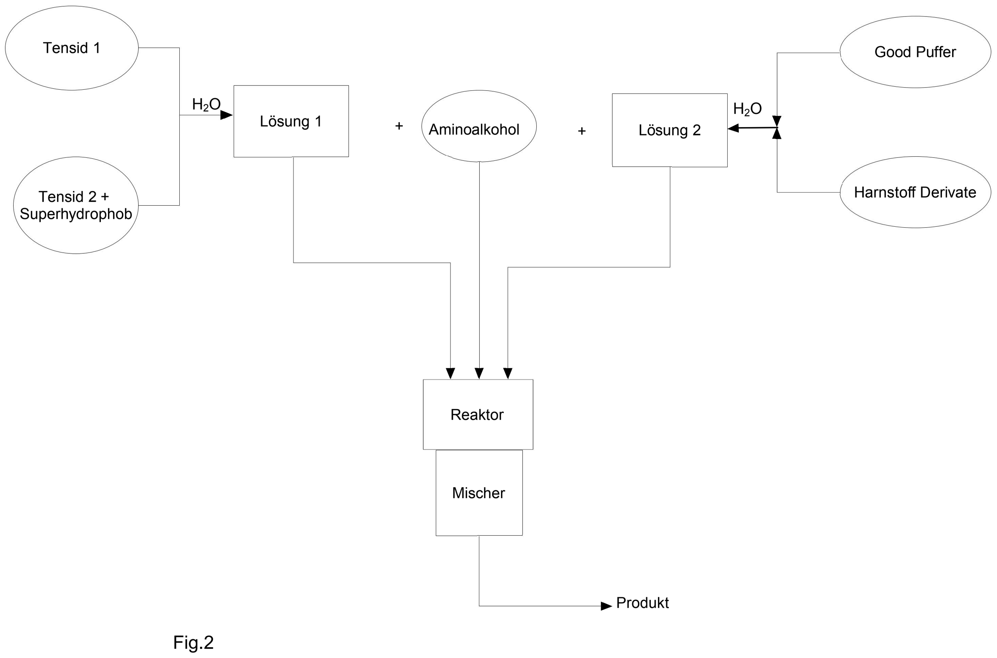

Die Figur 1 zeigt ein Flussdiagramm mit den Schritten S1 (Einleiten der Komponenten in den Homogenisierer), S2 (Homogenisieren der Mischung) bis S3 (Ausleiten der Emulsion) nebst einem optionalen ersten Schritt S0 des Vor-Mischens einiger oder aller Komponenten. In Figur 2 ist genauer gezeigt, welche Komponenten in welcher Weise zusammengegeben und dann dem Homogenisierer aufgegeben werden. Diese Darstellung ist nur beispielhaft und kann in vielfältiger Weise abgewandelt werden. Es ist aber zweckmäßig, das Superhydrophob (wenn zugegen) erst mit dem zweiten Tensid mit geringerer HLB (=weniger hydrophil) zusammenzugeben und dann mit dem ersten Tensid mit höherer HLB in Wasser zu lösen (Lösung 1) und andererseits leicht wasserlösliche Hilfsstoffe wie Harnstoff- und Aminosäure-Derivate erst in Wasser aufzulösen (Lösung 2) und erst dann in den Homogenisierer zu geben, parallel zum Aminoalkohol. Bei Einsatz eines bei Raumtemperatur festen Aminoalkohols kann dieser zunächst zwecks Verflüssigung mit etwas Wasser gemischt (oder 90%ig bezogen) und erst dann zugegeben werden. In diesem Beispiel ist der Reaktor/Mischer zweistufig dargestellt, wobei der Reaktor ein Rührkessel sein kann; dies ist aber nicht beschränkend, und der Reaktor/Mischer kann integral ausgebildet sein. Die Einleitung der Komponenten kann einzeln in den Reaktor erfolgen, oder die Leitungen können zusammengeführt werden. Natürlich kann jede Leitung mit einem Dosierventil und einem Flussmesser ausgestattet sein. Der Durchsatz durch den Reaktor/Mischer kann selbsttätig (durch hydrostatischen Druck) oder mittels einer Pumpe erfolgen. Die Pumpe kann steuerbar ausgebildet sein. Eine zentrale Steuerung ist zweckmäßig, die die Ventile und Pumpe(n) steuert. Zwecks Vorwärmung kann der erste, Reaktor-Teil (oben in Fig. 2) heizbar und/oder der zweite, Homogenisierer-Teil (unten in Fig. 2) kühlbar ausgebildet sein.

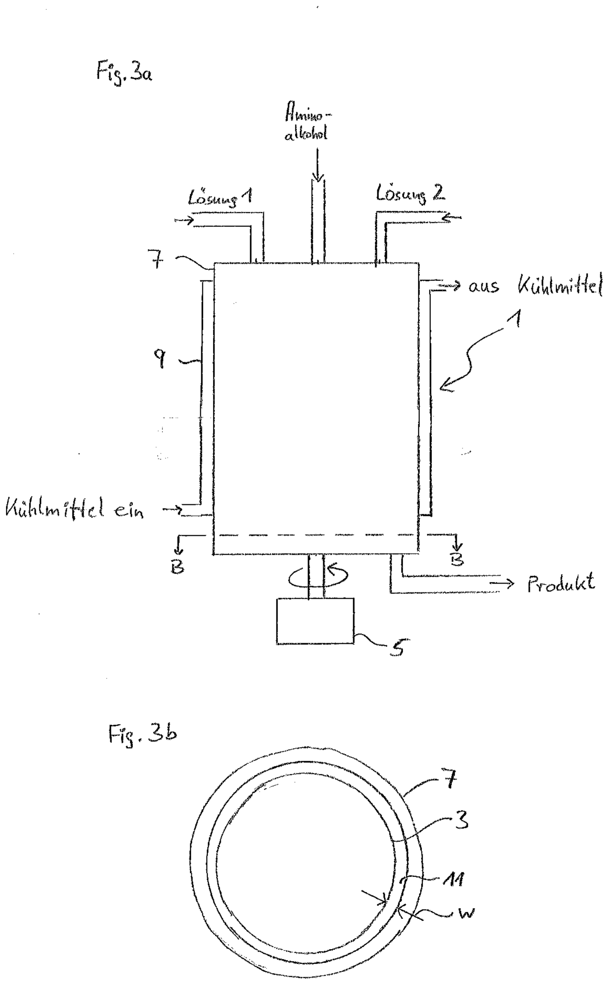

In Figur 3a ist schematisch ein Längs- und in Fig. 3b ein Querschnitt (entlang der Linie B--B) eines erfindungsgemäßen Mischers 1 (Homogenisierers) dargestellt, bei welchem ein innenliegender Rotor-Zylinder 3, angetrieben durch einen Motor 5 und bedarfsweise geheizt, konzentrisch in einem außenliegenden Stator-Hohlzylinder 7 dreht, der seinerseits bedarfsweise mit einem Kühlmantel 9 ausgestattet ist. Die einzelnen und/oder vorgemischten Zusammensetzungs-Komponenten werden direkt dem Spalt 11 zwischen den beiden Zylindern 3 und 7 aufgegeben, z. B. mittels einer (Membran)Pumpe und Ventilen (nicht dargestellt). Auf der gegenüberliegenden Stirnseite des Homogenisierers 1 wird die fertige Emulsion abgezogen. In Varianten davon kann auch der innenliegende Zylinder 3 kühlbar und/oder der außenliegende Zylinder 7 beheizbar ausgebildet sein. Die Spaltweite w beträgt typischerweise einige Zehn Mikrometer bis zu einem Millimeter, der Durchmesser des Ringspalts wenige Millimeter bis einige Zehn Millimeter. Es ist ohne weiteres denkbar und vielfach zweckmäßig, z. B. 7, 19 oder 37 solcher Homogenisierer als (z. B. symmetrisches) Bündel zusammen anzuordnen, um die Gesamt-Querschnittfläche, und damit den Durchsatz zu erhöhen. In einem solchen Fall kann die Kühlung (oder ggf. Heizung bzw. Thermostatierung) von außen über ein gemeinsames Fluid in einem Behälter erfolgen, wie bei einem Rohrbündelreaktor. Der innere Rotor-Zylinder kann hohl oder/und an seiner Außenseite beschichtet sein. Seine Umfangsfläche kann auf die vorgegebene Rauigkeit poliert oder gebeizt sein.

Der primäre Aminoalkohol kann insbesondere 2 Kohlenstoffatome (z. B. Monoethanolamin), 3 Kohlenstoffatome (z. B. N-Methylethanolamin), 4 Kohlenstoffatome (z. B. Diethanolamin oder Dimethyl-2-hydroxyethylamin), 5 Kohlenstoffatome (z. B. N-Methyldiethanolamin) oder 6 Kohlenstoffatome (z. B. Triethanolamin) aufweisen. In diesen Fällen ist der Aminoalkohol ein 1,2-Aminoalkohol (β-Aminoakohol), was bevorzugt, aber nicht zwingend ist. Das Amin kann ein primäres (z. B. Monoethanolamin oder Dimethyl-2-hydroxyethylamin), sekundäres (z. B. Diethanolamin oder N-Methylethanolamin) oder tertiäres Amin (z. B. N-Methyldiethanolamin oder Triethanolamin) sein. Unter diesen sind primäre Amine bevorzugt. Besonders bevorzugt ist Dimethyl-2-hydroxyethylamin (oder 2-Methyl-2-aminopropanol-1).

Die Stoffströmung im Mischer ist wegen der Scherkraft insgesamt helikal, dabei aber idealerweise turbulent, um eine intensive Durchmischung und Homogenisierung zu erreichen. Je nach den eingesetzten Komponenten kann eine Vorwärmung hilfreich sein. Im Zuge der Vermischung steigt wegen der inneren Verluste die Temperatur, so dass gegen Ende des Prozesses (zeit- und räumlich) Wärme abgeführt werden sollte. Zumeist reicht bei der Beispiel-Mischergeometrie eine Drehzahl bis 8000 UpM aus. Die Reynolds-Zahl liegt dann beispielsweise bei 1900 bis 2050, je nach der Viskosität, also knapp unterhalb der kritischen Reynolds-Zahl (Prof. Dr. Björn Hof, 2011).

Zur Unterstützung der Homogenisierung kann ein Ultraschallgeber vorgesehen sein. Bei einem Umfang des Ringspalts von ca. 16 cm und einer Spaltweite von 0,1 mm beträgt die Querschnittsfläche des Mischungsraums 16 mm², und bei einem beispielhaften Volumenfluss von 0,8 ml/s = 800 mm³/s wird der axiale Fluss 800/16 mm/s, also 50 mm/s. Bei einem typischen Mischervolumen von ca. 10000 mm³ (10 ml) wird dieses Volumen binnen ca. 12,5 s mittlerer Verweilzeit ausgetauscht. Die entstandene Emulsion weist typischerweise eine monodisperse Tröpfchengrößeverteilung auf. In einem Beispiel beträgt der Modalwert Dₘ ca. 250 nm, die Breite der Verteilung ΔD etwa 50 nm, und das Verhältnis ΔD/Dₘ folglich 20%. Hierin bedeutet ΔD die Breite des Verteilungsdichte-Peaks bei halber Höhe (FWHM*, full width at half* maximum). Auch größere Durchsatzraten von bis zu z. B. 4000 mm³/s sind aber möglich, mit entsprechend kürzeren Verweilzeiten (bis hinunter zu ca. 2,5 s) im Mischer. Allgemein betragen die relevanten Parameter des Mischers z.B. Spaltweite 50-500 µm, Drehzahl 500-50000 UpM, Schergeschwindigkeit 5000-500000 1/s, Rotordurchmesser 0,5-50 cm, Länge der Mischzone 5-100 cm.

Unter "Derivate" von Harnstoff und Aminosäuren sind solche Abkömmlinge zu verstehen, bei denen einzelne Atome oder Atomgruppen ausgetauscht sind. Darunter fallen Alkylierungen (z. B. ein- oder zweifache Methylierung) am Amin-Stickstoffatom, Veresterung (der Aminosäure) und ähnliche Modifikationen, auch Dimere, auch in Kombination miteinander. Insbesondere sind darunter solche Harnstoff-Abkömmlinge zu verstehen, bei denen ein- oder zweifache Substitutionen am Stickstoff erfolgt sind, wie z. B. N-Methylharnstoff, N,N'-Dimethylharnstoff oder N-(2,5-Dioxo-4-imidazolidinyl)harnstoff (Allantoin) bzw. veresterte Aminosäure-Abkömmlinge oder z. B. [(Aminoacetyl)amino]essigsäure (Glycylglycin). Nicht umfasst sind hingegen drei- oder mehrfache Substitutionen oder der Austausch von Stickstoff- oder Sauerstoffatomen gegen andere Atome (S) oder Atomgruppen.

Zusammengefasst stellt die Erfindung eine Konservierungszusammensetzung beinhaltend einen primären Aminoalkohol mit insgesamt 2 bis 6 Kohlenstoffatomen, wenigstens ein Tensid, Wasser und eine Pufferkomponente mit einem pKs-Wert zwischen 8 und 10,5 bereit. Eine Vorrichtung zur Herstellung der Zusammensetzung weist einen inneren Rotor-Zylinder und einen äußeren Stator-Zylinder auf, die dazu ausgebildet sind, gegeneinander zu rotieren und das Mischgut in axialer Richtung durch einen Spalt zwischen beiden Zylindern zu führen, um unter Einwirkung einer Scherkraft eine Emulsion zu erzeugen. Diese Emulsion bzw. die so hergestellte Zusammensetzung mit vorzugsweise > 50% Wasser wird als konservierender Zusatz zu einer wässrigen Dispersion mit einem Ziel-pH-Wert von 8 bis 10,5 verwendet. Dies beinhaltet die Zugabe der Konservierungszusammensetzung in einem Anteil von 0,1 bis 1,0 Vol% des Volumens der wässrigen Dispersion.

## Patentansprüche

1. Biostatische Konservierungszusammensetzung, beinhaltend:
mindestens 40 Gew.-% Wasser;
einen primären Aminoalkohol mit insgesamt 2 bis 6 Kohlenstoffatomen in einem Anteil von 15 bis 50 Gew.-%;
wenigstens ein Tensid in einem seine Löslichkeit bei 23°C in dem Wasser-Aminoalkohol-Gemisch übersteigenden Anteil; und
eine Pufferkomponente mit einem pKs-Wert zwischen 8 und 10,5.

2. Biostatische Konservierungszusammensetzung nach Anspruch 1, wobei die Zusammensetzung im Wesentlichen frei von Bioziden ist.

3. Biostatische Konservierungszusammensetzung nach Anspruch 1 oder 2, **dadurch gekennzeichnet, dass** der primäre Aminoalkohol ein β-Aminoalkohol wie z. B. Trieethanolamin, Diethanolamin, Monoethanolamin, N-Methyldiethanolamin, N-Methylethanolamin oder, besonders bevorzugt, Dimethyl-2-hydroxyethylamin ist.

4. Biostatische Konservierungszusammensetzung nach einem der Ansprüche 1 bis 3, wobei das Tensid ein nichtionisches oder zwitterionisches Tensid ist, wobei das Tensid insbesondere ein oder mehrere aus der Gruppe Ausgewählte(s) umfasst, die aus Polyalkylenglycolether, Sorbitanfettsäureester, Alkylpolyglucosid, Fettalkoholethoxylat, Betain wie Cocoamidopropylbetain und Sultain wie Cocoamidopropylhydroxysultain besteht, und/oder wobei das Tensid eine Kombination von wenigstens einem Tensid mit einem höheren HLB-Wert und wenigstens einem Tensid mit einem niedrigeren HLB-Wert ist.

5. Biostatische Konservierungszusammensetzung nach einem der Ansprüche 1 bis 4, **dadurch gekennzeichnet, dass** sie ferner ein Superhydrophob beinhaltet, insbesondere ein n-Alkan mit 9 bis 24 Kohlenstoffatomen, besonders bevorzugt n-Hexadecan.

6. Biostatische Konservierungszusammensetzung nach einem der Ansprüche 1 bis 5, **dadurch gekennzeichnet, dass** sie ferner eine multifunktionelle Komponente beinhaltet, die mindestens eine Aminogruppe und mindestens eine sekundäre Hydroxy- oder Carbonylgruppe enthält und eine Molekülmasse von vorzugsweise bis zu 150 atomaren Masseeinheiten aufweist, wobei die Carbonylgruppe insbesondere direkt oder über 1 Kohlenstoffatom an die wenigstens eine Aminogruppe gebunden ist, wobei die multi-funktionelle Komponente insbesondere ein Harnstoffderivat oder ein Aminosäurederivat ist.

7. Biostatische Konservierungszusammensetzung nach einem der Ansprüche 1 bis 6, wobei die Pufferkomponente einen oder mehrere aus der Gruppe der Good-Puffer umfasst, insbesondere ausgewählt aus der Gruppe, die aus 4-(2-Hydroxyethyl)-piperazin-1-propansulfonsäure, N-(Tri(hydroxymethyl)methyl)glycin, [Tris(hydroxymethyl)methylamino]propansulfonsäure, Glycinamid und N,N-Bis(2-hydroxyethyl)glycin besteht.

8. Biostatische Konservierungszusammensetzung nach einem der Ansprüche 1 bis 7, wobei die Zusammensetzung eine Miniemulsion oder Nanoemulsion ist.

9. Biostatische Konservierungszusammensetzung nach Anspruch 11, wobei die Emulsion bei nephelometrischer Messung nach ISO 7027-1:2016 eine Trübung von 50 NTU oder mehr und 400 NTU oder weniger aufweist.

10. Verfahren zur Herstellung der biostatische Konservierungszusammensetzung nach Anspruch 8 oder 9, wobei das Verfahren das Mischen zumindest des Aminoalkohols, des Tensids und des Wassers in einem Kontinuierlicher-Durchfluss-Reaktor unter erhöhtem Druck und/oder erhöhter Temperatur sowie das Homogenisieren der Mischung unter Einwirkung von Scherkraft bis zum Erhalt einer Miniemulsion oder Nanoemulsion beinhaltet.

11. Vorrichtung zum Herstellen der biostatischen Konservierungszusammensetzung von einem der Ansprüche 1 bis 9 nach dem Verfahren von Anspruch 10, wobei die Vorrichtung einen koaxialen Homogenisierungs-Mischer und einen jenem vorgeschalteten oder mit ihm integrierten Kontinuierlicher-Durchfluss-Reaktor beinhaltet, wobei der Mischer einen inneren Rotor-Zylinder und einen äußeren Stator-Zylinder aufweist und dazu ausgebildet ist, das Mischgut in im Wesentlichen axialer Richtung durch einen Spalt zwischen den beiden gegeneinander rotierenden Zylindern zu führen, wobei die Summe der Rz-Werte der einander zugewandten Zylinderflächen kleiner ist als die nominelle Spaltweite, so dass das Mischgut durch die Rotation des inneren Rotor-Zylinders einer Scherkraft ausgesetzt wird.

12. Vorrichtung nach Anspruch 11, ferner umfassend einen Kühlmantel für den äußeren Stator-Zylinder und/oder eine Heizung für den inneren Rotor-Zylinder.

13. Verwendung der Vorrichtung nach Anspruch 11 oder 12, wobei die absolute Umfangsgeschwindigkeit des inneren Rotor-Zylinders gegenüber dem äußeren Stator-Zylinder, gemessen an der Außenfläche des Rotors, dividiert durch die radiale Weite des Spalts zwischen dem Rotor-Zylinder und dem Stator-Zylinder, im Betrieb der Vorrichtung zwischen 40000 und 80000 s⁻¹ beträgt.

14. Verwendung der Vorrichtung nach Anspruch 13 oder in dem Verfahren nach Anspruch 10, wobei die Reynolds-Zahl im Bereich 800 bis 3200 liegt.

15. Verwendung der biostatischen Konservierungszusammensetzung von einem der Ansprüche 1 bis 9, oder der nach Anspruch 10 oder mittels der Vorrichtung nach Anspruch 11 bis 13 hergestellten biostatischen Konservierungszusammensetzung, als konservierender Zusatz zu einer wässrigen Dispersion mit einem Ziel-pH-Wert von 8 bis 10,5, insbesondere beinhaltend das Hemmen der Vermehrung von ubiquitären Mikroben wie Schimmelpilzen, Hefen oder/und Bakterien und/oder wobei die wässrige Dispersion ein Lack, eine Farbe oder eine Wandfarbe, ein Klebstoff oder ein Bindemittel ist.
